# EUROPÄISCHE PATENTSCHRIFT

(11) **EP 3 119 598 B1**
(45) Veröffentlichungstag und Bekanntmachung des Hinweises auf die Patenterteilung: **22.01.2020**
(21) Anmeldenummer: 15702772.3
(22) Anmeldetag: 05.02.2015
(51) Int. Cl.: B29D 30/00, B60C 23/04, H01Q 1/22

(54) **MONTAGEVORRICHTUNG ZUM BEFESTIGEN EINES REIFENMODULS**
MOUNTING DEVICE FOR SECURING A TYRE MODULE
DISPOSITIF DE MONTAGE POUR FIXER UN MODULE DE PNEUMATIQUE

(30) Priorität: 18.03.2014 DE 102014103674
(43) Veröffentlichungstag der Anmeldung: 25.01.2017
(73) Patentinhaber: Huf Baolong Electronics Bretten GmbH, 75015 Bretten (DE)
(72) Erfinder: BAMBECK, Daniel, 45149 Essen (DE); CZECH, Peter, 40627 Düsseldorf (DE); LÜTZNER, Jürgen, 42781 Haan (DE)
(74) Vertreter: Zenz Patentanwälte Partnerschaft mbB
(86) Internationale Anmeldenummer: PCT/EP2015/052371
(87) Internationale Veröffentlichungsnummer: WO 2015/139878

(56) Entgegenhaltungen:
- EP-A1- 1 544 869
- EP-A1- 2 100 756
- EP-A1- 2 514 612
- CN-U- 2 120 668
- DE-A1-102009 025 794
- KR-A- 20110 061 307
- US-A- 3 871 106
- US-A1- 2004 262 827
- US-A1- 2006 032 563
- US-A1- 2006 238 356
- US-A1- 2007 039 458
- US-A1- 2009 165 928
- US-A1- 2011 095 870
- US-A1- 2012 176 762
- US-A1- 2013 078 385

## Beschreibung

Die Erfindung richtet sich auf eine Montagevorrichtung zum Befestigen eines Reifenmoduls, insbesondere eines Reifendrucksensors, an einer Innenseite eines Luftreifens für Fahrzeuge, aufweisend einen Ständer, von dem aus sich ein Tragarm erstreckt, wobei an dem dem Ständer abgewandten Längsende des Tragarms ein mit einer vorgebbaren Kraft absenkbarer Setzkopf angebracht ist.

Die US 2009/0165928 offenbart eine Vorrichtung zum Befestigen eines RFID-Patches auf der Innenseite eines Reifens. Die Vorrichtung weist einen Ständer auf, von dem sich ein Tragarm erstreckt, wobei an dem Tragarm ein Setzkopf angebracht ist, welcher in Richtung der Innenseite des Reifens bewegbar ist. An dem Setzkopf ist eine Haltevorrichtung mit Öffnungen angeordnet, welche ein Vakuum zum Festklemmen des Patches an dem Setzkopf erzeugen können.

Aus der KR 2011 0061307 ist eine Vorrichtung bekannt, mit welcher ein geräuschdämmendes Material auf die Innenseite eines Fahrzeugreifens aufbringbar ist. Die Vorrichtung umfasst eine Werkbank, auf welcher der Fahrzeugreifen mit Hilfe von Halterungen fixiert wird. Zur Aufbringung des geräuschdämmenden Materials weist die Vorrichtung einen dreiarmigen Arbeitskopf auf, welcher einen Düsenarm, der einen Primer für die Klebung auf die Innenseite des Fahrzeugreifens sprüht, einen Reinigungsarm, welcher überschüssigen Primer entfernt, und einen Aufklebe-Setzarm umfasst, welcher das geräuschdämmende Material auf die Innenseite des Fahrzeugreifens aufbringt.

Die DE 10 2009 025 794 offenbart eine Vorrichtung zur Montage von Reifenmodulen auf einem Fahrzeugreifen, wobei die Vorrichtung ein Andrückmittel umfasst, welches einen hohen Automatisierungsgrad erlaubt. Dabei umfasst das Andrückmittel eine Luftleitung, mit der ein Unterdruck erzeugt wird, mit dem das Reifenmodul sicher im Andrückmittel gehalten wird. Die Luftleitung kann aber auch einen Überdruck erzeugen, um die Klebeverbindung zwischen dem Reifenmodul und der Oberfläche des Fahrzeugreifens zusätzlich zu verstärken. Darüber hinaus kann auch noch vorkonditionierte Luft über die Luftleitung den Klebeprozess optimieren.

Aus der US 2006/238356 A1 ist die Herstellung einer Reifenkarkasse bekannt. Wenn die Karkasse zum Teil oder komplett gefertigt ist, wird ein RFID-Modul an einem vorbestimmten Bereich der Karkasse angebracht. Nach Fixierung oder Aufbringung des RFID-Moduls wird ferner eine Bandstruktur mittels Vulkanisation aufgebracht, um den Reifen fertig zu stellen.

Reifenmodule zum Anbringen an einer Innenseite eines Luftreifens für Fahrzeuge sind aus dem Stand der Technik bekannt. Beispielsweise offenbart die DE 10 2012 007 071 A1 ein solches Reifenmodul mit einer Einrichtung zum Messen und/oder Überwachen des Luftdrucks in dem Reifen, wobei die Einrichtung mit Hilfe einer Vergussmasse vergossen und gekapselt und in einer hutförmigen Halterung aufgenommen ist. Der umlaufende Rand der hutförmigen Halterung dient dabei zur Befestigung des Reifenmoduls an der Innenseite des Luftreifens und kann zum Beispiel durch Kleben oder Vulkanisieren an der Innenseite befestigt werden. Problematisch bei allen bekannt gewordenen Reifenmodulen ist deren Befestigung an der Innenseite des Luftreifens, da sich nach längeren Betriebszeiten Ablöseerscheinungen des Reifenmoduls mit der elektronischen Einrichtung einstellen. Daneben besteht der Wunsch einiger Reifenhersteller, die Reifenmodule mit den elektronischen Einrichtungen derart an der Innenseite eines Luftreifens festzulegen, dass sie nach erkannten Beschädigungen auf relativ einfache Weise ausgebaut und durch neue ersetzt werden können. Bei dem aus der DE 10 2012 007 071 A1 bekannten Reifenmodul ist ferner bei der Befestigung des Reifenmoduls mittels Vulkanisation das reproduzierbare zentrische und gleichmäßige Anpressen des Reifenmoduls auf die Innenseite des Luftreifens problematisch.

Der Erfindung liegt die Aufgabe zugrunde eine Lösung zu schaffen, mit der auf konstruktiv einfache Weise ein Reifenmodul reproduzierbar an einer Innenseite eines Luftreifens eines Fahrzeugs befestigt werden kann.

Bei einer Montagevorrichtung der Eingangs bezeichneten Art wird die Aufgabe erfindungsgemäß dadurch gelöst, dass das Reifenmodul hutförmig ausgebildet ist, wobei der Setzkopf eine Haltevorrichtung, mit welcher das Reifenmodul während des Befestigens in klemmender Weise an dem Setzkopf lösbar gehalten werden kann, und wenigstens ein Heizelement zum stoffschlüssigen Verbinden des Reifenmoduls mit der Innenseite des Luftreifens aufweist, wobei der Tragarm an seinem dem Setzkopf abgewandten Längsende schwenkbar an dem Ständer gelagert ist, wobei an dem Tragarm wenigstens ein den Setzkopf hebend und mit der vorgegebenen Kraft absenkend ausgebildeter erster Pneumatikzylinder angeordnet ist, und wobei der Setzkopf als Hohlzylinder ausgebildet ist und das hutförmige Reifenmodul derart in den Hohlraum des Setzkopfes eingedrückt angeordnet ist, dass ein umlaufender Rand des Reifenmoduls und die Unterseite des hutförmigen Reifenmoduls an einem den ersten Pneumatikzylinder abgewandten Längsende des Setzkopfes angeordnet sind, so dass bei Absenkung des Setzkopfes wenigstens der umlaufende Rand des hutförmigen Reifenmoduls auf die Innenseite des Luftreifens gedrückt wird.

Vorteilhafte und zweckmäßige Ausgestaltungen und Weiterbildungen der Erfindung ergeben sich aus den jeweiligen Unteransprüchen.

Durch die Erfindung wird eine Montagevorrichtung zum Befestigen eines Reifenmoduls, wie zum Beispiel ein Reifendrucksensor, an der Innenseite eines Luftreifens zur Verfügung gestellt, welche sich durch eine funktionsgerechte Konstruktion auszeichnet und einen einfachen und kostengünstigen Aufbau aufweist. Insbesondere dient die erfindungsgemäße Montagevorrichtung dazu, Reifendrucksensoren auf die Innenfläche eines Luftreifens aufzuvulkanisieren. Mit der erfindungsgemäßen Montagevorrichtung ist es möglich, dass für diesen Befestigungsprozess die Parameter Temperatur, Anpressdruck und Zeit variabel einstellbar sind und dass darüber hinaus das Anpressen des Reifenmoduls zentrisch im Reifen und gleichmäßig über den gesamten Umfang des Reifenmoduls erfolgt. Zur schnellen Aufheizung des Setzkopfes ist der Setzkopf erfindungsgemäß als Hohlzylinder ausgebildet. Um einen mit einem Reifenmodul zu versehenen Luftreifen schnell und problemlos in Position zu bringen, ist erfindungsgemäß vorgesehen, dass der Tragarm an seinem dem Setzkopf abgewandten Längsende schwenkbar an dem Ständer gelagert ist. Zum Antrieb der Montagevorrichtung ist die Verwendung von Druckluft vorgesehen. Entsprechend ist gemäß der Erfindung an dem Tragarm wenigstens ein den Setzkopf hebend und mit der vorgegebenen Kraft absenkend ausgebildeter erster Pneumatikzylinder angeordnet, der als einseitig und beidseitig Druckluft beaufschlagbarer Zylinder ausgeführt sein kann.

In Ausgestaltung der Erfindung ist vorgesehen, dass das wenigstens eine Heizelement als ein PTC-Heizelement ausgebildet ist. Durch die Verwendung von wenigstens einem PTC-Heizelement ist das System aus Montagevorrichtung und Reifenmodul eigensicher und erwärmt sich auch bei Dauerbestromung nicht über 230°C.

Um möglichst genau die Temperatur an der Fläche, bei der das Reifenmodul auf die Innenseite des Luftreifens gedrückt wird, zu messen, sieht die Erfindung in weiterer Ausgestaltung vor, dass der Setzkopf mindestens einen Temperaturfühler aufweist, der an dem das Reifenmodul haltenden Längsende des Setzkopfes angeordnet ist. Der Temperaturfühler ist vorzugsweise in einer Bohrung am untersten Ende des Setzkopfes montiert, was eine genaue Temperaturmessung an der Verbindungsfläche von Reifenmodul und Luftreifen ermöglicht.

Die Erfindung sieht in vorteilhafter Ausgestaltung vor, dass der Setzkopf mittels einer kardanischen Lagerung an dem Tragarm angebracht ist. Durch diese besondere Lagerung des Setzkopfes ist ein zentrisches und gleichmäßiges Anpressen des Reifenmoduls auf die Innenseite des Luftreifens möglich. Insbesondere wird durch die kardanische Lagerung die Wölbung und leichte Unebenheiten im Luftreifen ausgeglichen.

Zur Einstellung und Überprüfung der Kraft, mit welcher der Setzkopf das Reifenmodul auf die Innenseite des Luftreifens drückt, sieht die Erfindung in Ausgestaltung vor, dass eine Waage, insbesondere eine Industriewaage, zur Überprüfung sowie Kalibrierung der vorgebbaren Kraft vorgesehen ist, die unterhalb des Setzkopfes angeordnet ist.

Um die Reifenmitte mit Bezug auf das zu befestigende Reifenmodul immer gleich zu positionieren, ist in weiterer Ausgestaltung der Erfindung vorgesehen, dass ein zur reproduzierbaren Ausrichtung eines Luftreifens ausgebildeter Zentrischspanner unterhalb des Setzkopfes angeordnet ist.

Um den Luftreifen einfacher an der Montagevorrichtung platzieren und von dieser entfernen zu können, ist in einer weiteren Ausgestaltung der Erfindung vorgesehen, dass ein an dem Ständer oder an dem Tragarm angebrachter zweiter Pneumatikzylinder zur Verschwenkung des Tragarms zwischen einer den Setzkopf anhebenden Position und einer den Tragarm im Wesentlichen quer zum Ständer haltenden Absenkposition vorgesehen ist. Auch dieser Pneumatikzylinder kann als einseitig und beidseitig Druckluft beaufschlagbarer Zylinder ausgebildet sein.

Damit bei dem Pneumatikkreis bzw. dem Pneumatik-Leitungssystem der Montagevorrichtung ein bestimmter Druck nicht überschritten wird, ist es vorteilhaft, wenn in dem zu den beiden Pneumatikzylindern führenden Leitungssystem ein zur Einstellung des Systemdrucks dienender Druckminderer angeordnet ist. Dadurch ist trotz unterschiedlicher Drücke auf der Eingangsseite des Systems die Einhaltung eines bestimmten Ausgangsdrucks möglich.

Um den Weg für die Druckluft zu den Pneumatikzylindern freizugeben, zu sperren, die Durchflussrichtung zu ändern oder die Leitung zu entlüften, sieht die Erfindung in weiterer Ausgestaltung vor, dass in dem Leitungssystem zwischen dem Druckminderer und den beiden Pneumatikzylindern ein Wegeventil angeordnet ist, welches mit Hilfe einer Elektrobox elektrisch steuerbar ist. Die Steuerung kann beispielsweise durch einen Benutzer manuell erfolgen. Alternativ zu der Steuerung durch einen Benutzer kann die Elektrobox auch programmierbar ausgebildet sein und ein entsprechendes Programm zur Befestigung eines Reifenmoduls an einem Luftreifen abarbeiten.

In weiterer Ausgestaltung der Erfindung ist vorgesehen, dass von dem Wegeventil eine erste Zuleitung und eine zweite Zuleitung abgehen, wobei sich eine jeweilige Zuleitung in eine zu dem ersten Pneumatikzylinder führende Zweigleitung und eine zu dem zweiten Pneumatikzylinder führende Zweigleitung teilt, wobei in der jeweiligen Zweigleitung jeweils ein Drosselventil zur Ablaufsteuerung der Pneumatikzylinder angeordnet ist. Die Drosselventile bzw. Reduzierventile dienen der Ablaufsteuerung der Montagevorrichtung. Beim Setzen bzw. Absenken des Setzkopfes wird der Zufluss zu dem Pneumatikzylinder, der den Setzkopf anhebt und absenkt, deutlich stärker reduziert, als der Zufluss zu dem Pneumatikzylinder, der den Tragarm verschwenkt. Beim Abheben bzw. Anheben des Setzkopfes ist die Einstellung entsprechend invertiert. Dadurch ist ein definiertes zeitliches Verhalten der Montagevorrichtung bei Befestigung eines Reifenmoduls an einem Luftreifen reproduzierbar, ohne aufwändige Steuerungselektronik einsetzen zu müssen.

Schließlich sieht die Erfindung in Ausgestaltung vor, dass die Elektrobox einen Temperaturregler zur Regelung der Temperatur des Setzkopfes, einen Zeitgeber zur Überprüfung der Zeitdauer des Befestigungsvorgangs, eine Zurücksetzungstaste zum Beenden des Befestigungsvorgangs und eine Starttaste zum Starten des Befestigungsvorgangs umfasst. In der Elektrobox sind folglich der Temperaturregler (zum Beispiel Tempatron PID500) und ein Zeitdauer-Modul (zum Beispiel Panasonic LT4H), sowie Start- und Reset-Taster zusammengefasst. Der Temperaturregler steuert ein Halbleiterrelais an, um das wenigstens eine Heizelement mit ca. 200W am Setzkopf auf die nötige Temperatur zu heizen. Die Temperatur wird über eine PID-Regler-Funktion sehr genau ohne großes Überschwingen erreicht und gehalten. Soll- und Istwert werden jederzeit von der Elektrobox angezeigt.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein exemplarisches Pneumatikschema der erfindungsgemäßen Montagevorrichtung zum Befestigen eines Reifenmoduls auf der Innenseite eines Luftreifens,
Figur 2 eine schematische Seitenansicht auf die erfindungsgemäße Montagevorrichtung und
Figur 3 eine schematische Seitenansicht auf einen Setzkopf der Montagevorrichtung.

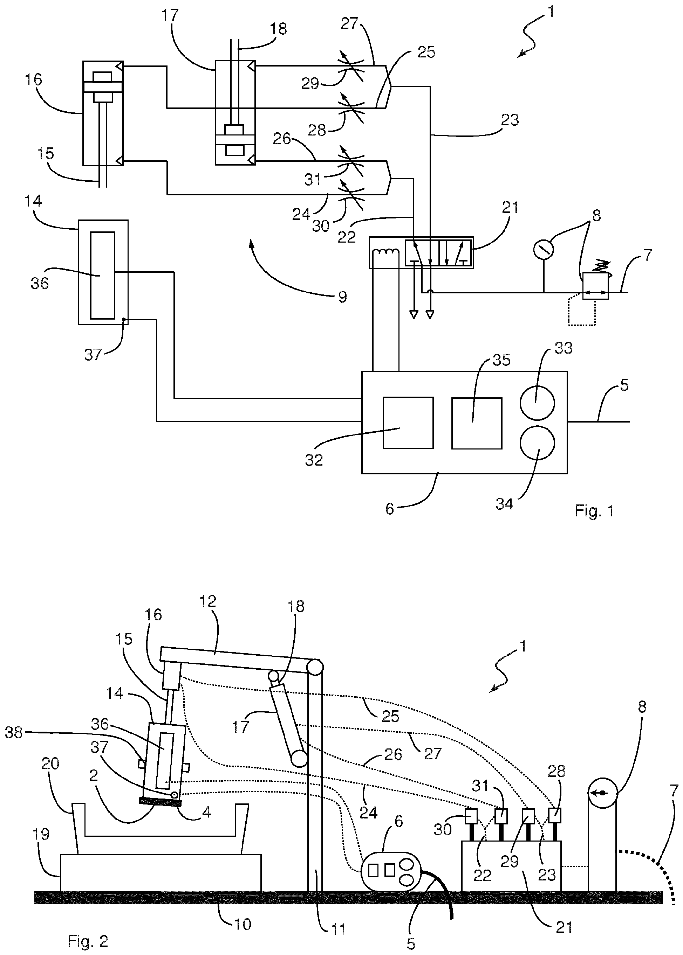

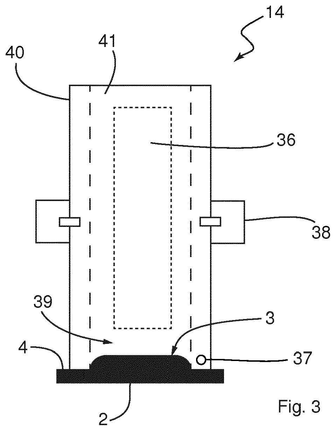

In Figur 1 ist die erfindungsgemäße Montagevorrichtung 1 in Form eines Pneumatikschemas dargestellt, wohingegen in Figur 2 die Montagevorrichtung 1 in einer schematischen Seitenansicht gezeigt ist. Die Montagevorrichtung 1 dient dazu, Reifendrucksensoren, die nachstehend als Reifenmodule 2 bezeichnet werden, auf die Innenseite eines Luftreifens für Fahrzeuge zu vulkanisieren. Ein solches Reifenmodul 2 ist aus dem Stand der Technik, beispielsweise aus der DE 10 2012 007 071 A1 bekannt, und umfasst eine gekapselte elektronische Einrichtung zum Messen und/oder Überwachen des Luftdrucks in dem Reifen und eine hutförmige Halterung 3 zur Aufnahme der elektronischen Einrichtung. Die hutförmige Halterung 3 des Reifenmoduls 2 weist - wie aus Figur 3 ersichtlich ist - einen umlaufenden Rand 4 auf, der zur Befestigung des Reifenmoduls 2 an der Innenseite des Luftreifens dient.

Für den Prozess der Aufvulkanisation des Reifenmoduls 2 auf die Innenseite eines Luftreifens müssen im Allgemeinen die Parameter Temperatur, Anpressdruck und Zeit variabel einstellbar sein, wobei darüber hinaus das Anpressen zentrisch im Luftreifen und gleichmäßig über den gesamten Umfang des Reifenmoduls 2 erfolgen muss. Diesem Zweck dient die erfindungsgemäße Montagevorrichtung 1, die zum Aufvulkanisieren eine Versorgung mit einer Wechselspannung von 230 Vac, die mit Bezug auf Figur 1 über eine Spannungszuleitung 5 einer Elektrobox 6 zugeführt wird, und Druckluft bis 8 bar benötigt, die über eine Druckluftzuleitung 7 einem Druckminderer 8 zugeführt wird, von wo aus die Druckluft einem Leitungssystem 9 (Pneumatiksystem) der Montagevorrichtung 1 bereitgestellt wird. Mit Hilfe des Druckminderers 8 ist sichergestellt, dass für das Leitungssystem 9 ein Druck von 8 bar nicht überschritten wird.

Der Druckminderer 8 ist zusammen mit weiteren, nachstehend noch näher zu beschreibenden Bauteilen der Montagevorrichtung 1 auf einer Grundplatte 10 aus zum Beispiel Aluminium befestigt. Auf der Grundplatte 10 ist ferner ein Ständer 11 der Montagevorrichtung 1 fixiert, von dem aus sich ein Tragarm 12 erstreckt. Der Tragarm 12 ist mit einem ersten Längsende schwenkbar an dem Ständer 11 gelagert, wohingegen an dem dem Ständer 11 abgewandten Längsende ein Setzkopf 14 angebracht ist, welcher ein zur Befestigung am Luftreifen bestimmtes Reifenmodul 2 festhält. Der Setzkopf 14 ist mit Hilfe einer Kolbenstange 15 eines ersten Pneumatikzylinders 16 in Richtung der Grundplatte 10 absenkbar, um den Setzkopf 14 mit einer vorgegebenen Kraft auf die Innenseite eines Luftreifens zur Befestigung eines Reifenmoduls 2 zu drücken, wobei der Setzkopf 14 ebenso mit Hilfe des ersten Pneumatikzylinders 16 wieder anhebbar ist. Um die Platzierung eines Luftreifens unterhalb des Setzkopfes 14 zu erleichtern, ist der Tragarm 12 mit seinem dem Setzkopf 14 abgewandten Längsende schwenkbar an dem Ständer 11 gelagert, so dass das den Setzkopf 14 aufweisende Längsende des Tragarms 12 absenkbar und anhebbar ist. Zu diesem Zweck ist ein zweiter Pneumatikzylinder 17 vorgesehen, dessen Kolbenstange 18 den Tragarm 12 verschwenken kann. In dem dargestellten Ausführungsbeispiel ist der zweite Pneumatikzylinder 17 an dem Ständer 11 angebracht, wobei alternativ auch eine Befestigung an dem Tragarm 12 denkbar wäre. Mit Hilfe des zweiten Pneumatikzylinders 17 ist der Tragarm 12 zwischen einer den Setzkopf 14 anhebenden Position und einer den Tragarm 12 im Wesentlichen quer zum Ständer 11 haltenden Absenkposition verschwenkbar.

Zur Bestimmung und/oder Überprüfung und/oder Kalibrierung der Kraft, mit welcher der Setzkopf 14 auf die Innenseite eines Luftreifens gedrückt wird, ist eine Waage 19 vorgesehen, die auf der Grundplatte 10 unterhalb des Setzkopfes 14 angeordnet ist. Als Waage 19 kann beispielsweise eine Industriewaage verwendet werden. Zur Fixierung eines Luftreifens umfasst die Montagevorrichtung 1 neben der Waage 19 einen Zentrischspanner 20, der auf der Waage 19 und folglich auch unterhalb des Setzkopfes 14 angeordnet ist und eine reproduzierbare Ausrichtung und Platzierung des Luftreifens ermöglicht. Der Zentrischspanner 20 ist in dem dargestellten Ausführungsbeispiel als mechanischer Zentrischspanner ausgeführt, wobei alternativ auch die Verwendung eines pneumatischen Zentrischspanners denkbar ist, der mit in das Leitungssystem 9 eingebunden und über Ventiltechnik steuerbar ist.

Der Druckminderer 8 ist stromauf der beiden Pneumatikzylinder 16, 17 angeordnet und stellt den Systemdruck ein, wie vorstehend bereits ausgeführt. Dabei ist zwischen dem Druckminderer 8 und den beiden Pneumatikzylindern 16, 17 ein Wegeventil 21 angeordnet, welches mit Hilfe der Elektrobox 6 von einem Benutzer elektrisch steuerbar ist. Das Wegeventil 21 dient folglich der Steuerung der beiden Pneumatikzylinder 16, 17, indem es verschiedene Schaltstellungen einnimmt, die durch die Elektrobox 6 vorgegeben werden.

Von dem Wegeventil 21 geht eine erste Zuleitung 22 und eine zweite Zuleitung 23 ab. Die erste Zuleitung 22 teilt sich in eine zu dem ersten Pneumatikzylinder 16 führende Zweigleitung 24 und in eine zu dem zweiten Pneumatikzylinder 17 führende Zweigleitung 25. Die zweite Zuleitung 23 teilt sich ebenfalls in eine zu dem ersten Pneumatikzylinder 16 führende Zweigleitung 26 und in eine zu dem zweiten Pneumatikzylinder 17 führende Zweigleitung 27. In jeder der insgesamt vier Zweigleitungen 24, 25, 26, 27 ist jeweils ein Drosselventil 28, 29, 30, 31 angeordnet, um für das zu den Pneumatikzylindern 16, 17 strömende Fluid den Druck zu vermindern und das Volumen zu erhöhen. Mit anderen Worten teilt sich eine jeweilige Zuleitung 22, 23 in eine zu dem ersten Pneumatikzylinder 16 führende Zweigleitung 24, 26 und eine zu dem zweiten Pneumatikzylinder 17 führende Zweigleitung 25, 27, wobei in einer jeweiligen Zweigleitung 24, 25, 26, 27 jeweils ein Drosselventil 28, 29, 30, 31 zur Ablaufsteuerung der Pneumatikzylinder 16, 17 angeordnet ist. Die Druckluftleitungen sind in Figur 2 gestrichelt angedeutet und sollen lediglich die Verbindung veranschaulichen. Die Zuleitung von Druckluft vom Druckminderer 8 über das Wegeventil 21, welches als 5/2-Wegeventil ausgebildet ist, zu den Drosselventilen 28, 29, 30, 31, wird elektrisch mit Hilfe der Elektrobox 6 gesteuert. Hierzu weist die Elektrobox 6 einen Zeitgeber 32 zur Überprüfung der Zeitdauer des Befestigungsvorgangs, eine Zurücksetzungstaste 33 zum Beenden des Befestigungsvorgangs und eine Starttaste 34 zum Starten des Befestigungsvorgangs auf.

Die Elektrobox 6 der Montagevorrichtung 1 umfasst ferner einen Temperaturregler 35, der zur Regelung der Temperatur des Setzkopfes 14 dient. Der Setzkopf 14 weist wenigstens ein Heizelement 36 zum stoffschlüssigen Verbinden des Reifenmoduls 2 mit der Innenseite des Luftreifens auf, wobei das Heizelement 36 vorzugsweise als ein PTC-Heizelement ausgebildet ist. Zur Bestimmung der Temperatur des Setzkopfes 14 weist dieser mindestens einen Temperaturfühler 37 auf, der an dem das Reifenmodul 2 haltenden Längsende des Setzkopfes 14 zum Beispiel in einer Bohrung angeordnet ist.

Damit der Setzkopf 14 auch gleichmäßig das Reifenmodul 2 während des Befestigungsvorgangs auf die Innenseite des Luftreifens drückt, ist der Setzkopf 14 mittels einer kardanischen Lagerung 38 an dem Tragarm 12 angebracht, die in den Figuren 2 und 3 lediglich exemplarisch angedeutet ist. Um das Reifenmodul 2 auf die Innenseite des Luftreifens aufzudrücken, ist es notwendig, dass das Reifenmodul 2 zur Befestigung an dem Luftreifen zunächst an dem Setzkopf 14 fixiert ist und nach Befestigung von dem Setzkopf 14 gelöst wird. Zu diesem Zweck weist der Setzkopf 14 der Montagevorrichtung 1 eine Haltevorrichtung 39 vor, mit welcher das Reifenmodul 2 während des Befestigens in klemmender Weise an dem Setzkopf 14 lösbar gehalten werden kann. Dabei ist der Setzkopf 14 als ein Hohlzylinder 40 ausgebildet, wie es in Figur 3 durch die gestrichelten Linien angedeutet ist. Das hutförmige Reifenmodul 2 wird derart in den Hohlraum 41 des Setzkopfes 14 eingedrückt, dass der umlaufende Rand 4 und die Unterseite des hutförmigen Reifenmoduls 2 an dem dem ersten Pneumatikzylinder 16 abgewandten Längsende des Setzkopfes 14 angeordnet sind. Der Hohlzylinder 40 und dessen Hohlraum 41 bilden somit die Haltevorrichtung 39 aus, die das Reifenmodul 2 in klemmender Weise lösbar festhält. Bei Absenkung des Setzkopfes 14 wird dann wenigstens der umlaufende Rand 4 des hutförmigen Reifenmoduls 2 auf die Innenseite des Luftreifens gedrückt, wobei das Heizelement 36 des Setzkopfes 14 den Hohlzylinder 40 und damit den umlaufenden Rand 4 des Reifenmoduls 2 auf die zur stoffschlüssigen Verbindung notwendige Temperatur erwärmt, so dass zusammen mit dem vorgegebenen Druck des ersten Pneumatikzylinders 16, mit dem das Reifenmodul 2 auf die Innenseite des Luftreifens gedrückt wird, und einer vorgegebenen Anpressdauer wenigstens der umlaufende Rand 4 auf die Innenseite des Luftreifens aufvulkanisiert wird. Folglich wird zwischen dem Reifenmodul 2 und dem Luftreifen eine stoffschlüssige Verbindung erzeugt, um das Reifenmodul 2 zu befestigen. Die Anpressdauer beträgt ungefähr eine Minute, um die stoffschlüssige Verbindung herzustellen.

Die vorstehend beschriebene Montagevorrichtung 1 wird mit Hilfe von Druckluft betrieben, wobei über einen Druckminderer 8 der benötigte Systemdruck sichergestellt wird, der dem Wegeventil 21 zugeführt wird. Die Steuerung des Wegeventils 21 erfolgt dabei durch die Elektrobox 6, so dass die beiden Pneumatikzylinder 16, 17 entsprechend mit Druckluft zeitgesteuert beaufschlagt werden. Die Elektrobox 6 prüft aber auch, ob das Heizelement 18 an dem Setzkopf 14 für die notwendige Erwärmung am Längsende des Setzkopfes 14 sorgt, indem der Temperaturfühler 37 mit der Elektrobox 6 gekoppelt und von dieser steuerbar ist.

Zusammenfassend umfasst die erfindungsgemäße Montagevorrichtung 1 ein Grundgerüst aus einer stabilen Aluminiumplatte 10, auf der eine Industriewaage 19, ein schwenkbarer Tragarm 12 mit Setzkopf 14, Pneumatik-Elemente (zum Beispiel Pneumatikzylinder 16, 17 sowie Drosselventile 28, 29, 30, 31) und eine Elektrobox 6 befestigt sind.

Auf der Industriewaage 19 ist ein Zentrischspanner 20 montiert, um die Reifenmitte des Luftreifens immer gleich zu positionieren. Nach Einspannen des Luftreifens kann die Waage 19 genullt werden und über ein Display der Elektrobox 6 später die aufgebrachte Kraft abgelesen werden. Die Kraft ist dabei proportional zum Systemdruck, der über den Druckminderer 8 einstellbar ist. Dabei entsprechen 2 bar am Druckminderer ca. 6 kg Anpressdruck und 6 bar ca. 15 kg Anpressdruck. In Figur 1 ist der Druckminderer 8 mit seiner Anzeige dargestellt, wohingegen in Figur 2 die Anzeige den Druckminderer darstellt.

In der Elektrobox 6 sind ein Temperaturregler 35 (Tempatron PID500), ein Zeitgeber 32 (Timer-Modul, zum Beispiel Panasonic LT4H) und ein Starttaster 34 sowie ein Zurücksetzungstaster 33 zusammengefasst. Der Temperaturregler 35 steuert ein Halbleiterrelais an, um das wenigstens eine Heizelement 36 mit 200 W am Setzkopf 14 auf die nötige Temperatur zu heizen. Diese wird über eine PID-Regler-Funktion sehr genau ohne großes Überschwingen erreicht und gehalten. Soll- und Istwert werden jederzeit angezeigt. Der Temperaturfühler 37 ist in einer Bohrung am untersten Ende des Setzkopfs 14 montiert, um möglichst genau die Temperatur an der Pressfläche bzw. Andrückfläche zwischen Reifenmodul 2 und Innenseite des Luftreifens zu messen. Typische Werte liegen zwischen 120-150°C. Durch die Verwendung von PTC-Heizelementen ist das System eigensicher und erwärmt sich auch bei Dauerbestromung nicht über 230°C. Der Zeitgeber 32 dient nicht nur der Anzeige, sondern steuert auch das Pneumatik-Ventil bzw. Wegeventil 21 an. Der Starttaster 34 lässt die Zeit laufen und fährt die Pneumatikzylinder 16, 17 in die untere Position. Der Zurücksetzungstaster 33 oder das Ablaufen der eingestellten Zeit schalten das Pneumatik-Ventil bzw. Wegeventil 21 erneut um, damit der Setzkopf 14 wieder von dem Luftreifen abgehoben wird.

Der schwenkbare Tragarm 12 wird über den zweiten Pneumatikzylinder 17 von der geöffneten, schrägen Position in eine horizontale Lage bewegt. Der erste Pneumatikzylinder 16 drückt danach den Setzkopf 14 exakt vertikal auf die Reifenfläche bzw. Innenseite des Luftreifens. Durch diese Anordnung wird ein schräges Aufbringen vermieden. Zusätzlich ist der Setzkopf 14 kardanisch gelagert, um die Wölbung und leichte Unebenheiten im Reifen auszugleichen. Die Ablaufsteuerung erfolgt durch Reduzierventile bzw. Drosselventile 28, 29, 30, 31. Beim Setzen wird der Zufluss zum ersten Pneumatikzylinder 16 mit dem Setzkopf 14 deutlich stärker reduziert als zum zweiten Pneumatikzylinder 17. Beim Abheben ist die Einstellung entsprechend invertiert. Dadurch ist ein definiertes zeitliches Verhalten reproduzierbar, ohne aufwändige Steuerungselektronik einzusetzen. Ferner ist der Setzkopf 14 hohlgebohrt mit leichtem Untermaß, klemmt den Reifendrucksensor bzw. das Reifenmodul 2 folglich selbsttätig und ist ca. 4° angeschrägt, um die Verformung des hutartigen Reifenmoduls 2 auszugleichen.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist.

## Patentansprüche

1. Montagevorrichtung (1) zum Befestigen eines hutförmigen Reifenmoduls (2), insbesondere eines Reifendrucksensors, an einer Innenseite eines Luftreifens für Fahrzeuge, aufweisend einen Ständer (11), von dem aus sich ein Tragarm (12) erstreckt, wobei an dem dem Ständer (11) abgewandten Längsende des Tragarms (12) ein mit einer vorgebbaren Kraft absenkbarer Setzkopf (14) angebracht ist,
wobei der Setzkopf (14) eine Haltevorrichtung (39), mit welcher das hutförmige Reifenmodul (2) während des Befestigens in klemmender Weise an dem Setzkopf (14) lösbar gehalten werden kann, und wenigstens ein Heizelement (36) zum stoffschlüssigen Verbinden des hutförmigen Reifenmoduls (2) mit der Innenseite des Luftreifens aufweist,
wobei der Tragarm (12) an seinem dem Setzkopf (14) abgewandten Längsende schwenkbar an dem Ständer (11) gelagert ist,
wobei an dem Tragarm (12) wenigstens ein den Setzkopf (14) hebend und mit der vorgegebenen Kraft absenkend ausgebildeter erster Pneumatikzylinder (16) angeordnet ist, und
wobei der Setzkopf (14) als Hohlzylinder (40) ausgebildet ist und das hutförmige Reifenmodul (2) derart in den Hohlraum (41) des Setzkopfes (14) eingedrückt angeordnet ist, dass ein umlaufender Rand (4) des Reifenmoduls (2) und die Unterseite des hutförmigen Reifenmoduls (2) an einem den ersten Pneumatikzylinder (16) abgewandten Längsende des Setzkopfes (14) angeordnet sind, so dass bei Absenkung des Setzkopfes (14) wenigstens der umlaufende Rand (4) des hutförmigen Reifenmoduls (2) auf die Innenseite des Luftreifens gedrückt wird.

2. Montagevorrichtung (1) nach Anspruch 1, **dadurch gekennzeichnet, dass** das wenigstens eine Heizelement (36) als ein PTC-Heizelement ausgebildet ist.

3. Montagevorrichtung (1) nach Anspruch 1 oder 2, **dadurch gekennzeichnet, dass** der Setzkopf (14) mindestens einen Temperaturfühler (37) aufweist, der an dem das Reifenmodul (2) haltenden Längsende des Setzkopfes (14) angeordnet ist.

4. Montagevorrichtung (1) nach einem der vorhergehenden Ansprüche, **dadurch gekennzeichnet, dass** der Setzkopf (14) mittels einer kardanischen Lagerung (38) an dem Tragarm (12) angebracht ist.

5. Montagevorrichtung (1) nach einem der vorhergehenden Ansprüche, **dadurch gekennzeichnet, dass** eine Waage (19), insbesondere eine Industriewaage, zur Überprüfung sowie Kalibrierung der vorgebbaren Kraft vorgesehen ist, die unterhalb des Setzkopfes (14) angeordnet ist.

6. Montagevorrichtung (1) nach einem der vorhergehenden Ansprüche, **dadurch gekennzeichnet, dass** ein zur reproduzierbaren Ausrichtung eines Luftreifens ausgebildeter Zentrischspanner (20) unterhalb des Setzkopfes (14) angeordnet ist.

7. Montagevorrichtung (1) nach Anspruch 1, **dadurch gekennzeichnet, dass** ein an dem Ständer (11) oder an dem Tragarm (12) angebrachter zweiter Pneumatikzylinder (17) zur Verschwenkung des Tragarms (12) zwischen einer den Setzkopf (14) anhebenden Position und einer den Tragarm (12) im Wesentlichen quer zum Ständer (11) haltenden Absenkposition vorgesehen ist.

8. Montagevorrichtung (1) nach Anspruch 7, **dadurch gekennzeichnet, dass** in dem zu den beiden Pneumatikzylindern (16, 17) führenden Leitungssystem (9) ein zur Einstellung des Systemdrucks dienender Druckminderer (8) angeordnet ist.

9. Montagevorrichtung (1) nach Anspruch 8, **dadurch gekennzeichnet, dass** in dem Leitungssystem (9) zwischen dem Druckminderer (8) und den beiden Pneumatikzylindern (16, 17) ein Wegeventil (21) angeordnet ist, welches mit Hilfe einer Elektrobox (6) elektrisch steuerbar ist.

10. Montagevorrichtung (1) nach Anspruch 9, **dadurch gekennzeichnet, dass** von dem Wegeventil (21) eine erste Zuleitung (22) und eine zweite Zuleitung (23) abgehen, wobei sich eine jeweilige Zuleitung (22; 23) in eine zu dem ersten Pneumatikzylinder (16, 17) führende Zweigleitung (24; 26) und eine zu dem zweiten Pneumatikzylinder (17) führende Zweigleitung (25; 27) teilt, wobei in der jeweiligen Zweigleitung (24, 25, 26, 27) jeweils ein Drosselventil (28, 29, 30, 31) zur Ablaufsteuerung der Pneumatikzylinder (16, 17) angeordnet ist.

11. Montagevorrichtung (1) nach Anspruch 9 oder 10, **dadurch gekennzeichnet, dass** die Elektrobox (6) einen Temperaturregler (35) zur Regelung der Temperatur des Setzkopfes (14), einen Zeitgeber (32) zur Überprüfung der Zeitdauer des Befestigungsvorgangs, eine Zurücksetzungstaste (33) zum Beenden des Befestigungsvorgangs und eine Starttaste (34) zum Starten des Befestigungsvorgangs umfasst.

## Claims

1. Mounting device (1) for securing a hat-shaped tyre module (2), in particular a tyre pressure sensor, on an inner side of a pneumatic tyre for vehicles, having a stand (11), from which a support arm (12) extends, wherein a placement head (14), which can be lowered using a predetermined force, is attached on the longitudinal end of the support arm (12) facing away from the stand (11),
wherein the placement head (14) has a retaining device (39), with which the hat-shaped tyre module (2) may be detachably held in a clamping way on the placement head (14) during the fixing, and at least one heating element (36) for material connection of the hat-shaped tyre module (2) to the inner side of the pneumatic tyre,
wherein the support arm (12) is mounted on the stand (11) to be pivotable at its longitudinal end facing away from the placement head (14),
wherein at least one first pneumatic cylinder (16), which is designed to raise and lower the placement head (14) with the predetermined force, is arranged on the support arm (12), and
wherein the placement head (14) is designed as a hollow cylinder (40) and the hat-shaped tyre module (2) is arranged pressed into the cavity (41) of the placement head (14) in such a way that a circumferential edge (4) of the tyre module (2) and the bottom side of the hat-shaped tyre module (2) are arranged on a longitudinal end of the placement head (14) facing away from the first pneumatic cylinder (16), so that at least the circumferential edge (4) of the hat-shaped tyre module (2) is pressed on to the inner side of the pneumatic tyre during the lowering of the placement head (14).

2. Mounting device (1) according to claim 1, **characterized in that** the at least one heating element (36) is designed as a PTC heating element.

3. Mounting device (1) according to claim 1 or 2, **characterized in that** the placement head (14) has at least one temperature sensor (37), which is arranged on the longitudinal end of the placement head (14) holding the tyre module (2).

4. Mounting device (1) according to any one of the preceding claims, **characterized in that** the placement head (14) is attached on the support arm (12) by means of a gimbal bearing (38).

5. Mounting device (1) according to any one of the preceding claims, **characterized in that** a scale (19), in particular an industrial scale, is provided for checking and calibrating the predetermined force and is arranged underneath the placement head (14).

6. Mounting device (1) according to any one of the preceding claims, **characterized in that** a centric clamping vise (20), designed for reproducible alignment of a pneumatic tyre, is arranged underneath the placement head (14).

7. Mounting device (1) according to claim 1, **characterized in that** a second pneumatic cylinder (17) is attached on the stand (11) or on the support arm (12) for pivoting the support arm (12) between a position lifting the placement head (14) and a lowered position holding the support arm (12) substantially perpendicular to the stand (11).

8. Mounting device (1) according to claim 7, **characterized in that** a pressure relief valve (8), functioning for setting the system pressure, is arrranged in the duct system (9) leading to the two pneumatic cylinders (16, 17).

9. Mounting device (1) according to claim 8, **characterized in that** a directional valve (21), which can be electrically controlled with the aid of an electronics box (6), is arranged in the duct system (9) between the pressure relief valve (8) and the two pneumatic cylinders (16, 17).

10. Mounting device (1) according to claim 9, **characterized in that** a first supply line (22) and a second supply line (23) lead off from the directional valve (21), wherein each respective supply line (22; 23) splits into a branch line (24; 26) leading to the first pneumatic cylinder (16, 17) and a branch line (25; 27) leading to the second pneumatic cylinder (17), wherein a throttle valve (28, 29, 30, 31) for sequence control of the pneumatic cylinders (16, 17) is arranged in each branch line (24, 25, 26, 27).

11. Mounting device (1) according to claim 9 or 10, **characterized in that** the electronics box (6) comprises a temperature controller (35) for controlling the temperature of the placement head (14), a timer (32) for checking the duration of a fixing process, a reset button (33) for ending the fixing process, and a start button (34) for starting the fixing process.

## Revendications

1. Dispositif de montage (1) pour fixer un module de pneumatique en forme de chapeau (2), en particulier un capteur de pression de pneumatique, sur un côté intérieur d'un pneumatique pour véhicules, comportant un montant (11), duquel s'étend un bras de support (12), sachant qu'à l'extrémité longitudinale du bras de support (12) opposée au montant (11) est monté une tête de pose (14) abaissable avec une force prédéfinie, sachant que la tête de pose (14) comporte un dispositif de maintien (39), avec lequel le module de pneumatique en forme de chapeau (2) peut être maintenu de façon amovible sur la tête de pose (14) pendant la fixation en mode serré, et au moins un élément chauffant (36) pour la liaison par conformité de matière du module de pneumatique en forme de chapeau (2) avec la face intérieure du pneumatique,
sachant que le bras de support (12) est logé pouvant pivoter sur le montant (11) à son extrémité longitudinale opposée à la tête de pose (14),
sachant que sur le bras de support (12) est disposé au moins un premier vérin pneumatique (16) constitué levant et descendant avec la force prédéfinie la tête de pose (14), et
sachant que la tête de pose (14) est constituée comme un cylindre creux (40) et le module de pneumatique en forme de chapeau (2) est disposé enfoncé dans l'espace creux (41) de la tête de pose (14) de telle manière que le bord périphérique (4) du module de pneumatique (2) et la face inférieure du module de pneumatique en forme de chapeau (2) sont disposés sur une extrémité longitudinale opposée au premier vérin pneumatique (16) de la tête de pose (14) de telle sorte que lors de la descente de la tête de pose (14) au moins le bord périphérique (4) du module de pneumatique en forme de chapeau (2) est comprimé sur la face intérieure du pneumatique.

2. Dispositif de montage (1) selon la revendication 1, **caractérisé en ce qu'**au moins un élément chauffant (36) est constitué comme un élément chauffant à coefficient positif de température (CPT).

3. Dispositif de montage (1) selon la revendication 1 ou 2, **caractérisé en ce que** la tête de pose (14) comporte au moins une sonde de température (37), qui est disposée à l'extrémité longitudinale maintenant le module de pneumatique (2) de la tête de pose (14).

4. Dispositif de montage (1) selon l'une quelconque des revendications précédentes, **caractérisé en ce que** la tête de pose (14) est montée sur le bras de support (12) au moyen d'un montage à Cardan (38).

5. Dispositif de montage (1) selon l'une quelconque des revendications précédentes, **caractérisé en ce qu'**une bascule (19), en particulier une bascule industrielle, est prévue pour contrôler et étalonner la force prédéfinie, qui est disposée en dessous de la tête de pose (14).

6. Dispositif de montage (1) selon l'une quelconque des revendications précédentes, **caractérisé en ce qu'**un centreur (20) constitué pour l'orientation reproductible d'un pneumatique est disposé en dessous de la tête de pose (14).

7. Dispositif de montage (1) selon la revendication 1, **caractérisé en ce qu'**un deuxième vérin pneumatique (17) monté sur le montant (11) ou sur le bras de support (12) pour le pivotement du bras de support (12) est prévu entre une position levant la tête de pose (14) et une position de descente maintenant le bras de support (12) pour l'essentiel transversalement au montant (11).

8. Dispositif de montage (1) selon la revendication 7, **caractérisé en ce que** dans le système de conduites (9) conduisant aux deux vérins pneumatiques (16, 17) est disposé un réducteur de pression (8) servant à régler la pression du système.

9. Dispositif de montage (1) selon la revendication 8, **caractérisé en ce que** dans le système de conduites (9) entre le réducteur de pression (8) et les deux vérins pneumatiques (16, 17) est disposé un distributeur (21), lequel peut être commandé électriquement à l'aide d'un boîtier électrique (6).

10. Dispositif de montage (1) selon la revendication 9, **caractérisé en ce qu'**une première conduite d'alimentation (22) et une deuxième conduite d'alimentation (23) partent du distributeur (21), sachant qu'une conduite d'alimentation respective (22, 23) se divise en une conduite de dérivation (24, 26) conduisant vers le premier vérin pneumatique (16, 17) et une conduite de dérivation (25, 27) conduisant vers le deuxième vérin pneumatique (17), sachant que dans la conduite de dérivation respective (24, 25, 26, 27) est respectivement disposée une soupape d'étranglement (28, 29, 30, 31) pour la commande d'évacuation des vérins pneumatiques (16, 17).

11. Dispositif de montage (1) selon la revendication 9 ou 10, **caractérisé en ce que** le boîtier électrique (6) comprend un régulateur de température (35) pour réguler la température de la tête de pose (14), un compteur de temps (32) pour contrôler la durée de l'opération de fixation, une touche de réinitialisation (33) pour terminer l'opération de fixation et une touche de mise en marche (34) pour mettre en marche l'opération de fixation.
